(19) Europäisches Patentamt
European Patent Office
Office européen des brevets

(11) Veröffentlichungsnummer : **0 022 984**
**B1**

(12) **EUROPÄISCHE PATENTSCHRIFT**

(45) Veröffentlichungstag der Patentschrift : **13.01.82**

(21) Anmeldenummer : **80103925.6**

(22) Anmeldetag : **09.07.80**

(51) Int. Cl.³ : **C 07 C 69/743**, C 07 C 49/567, C 07 C121/48, C 07 C103/19, C 07 C 67/30

(54) **Verfahren zur Herstellung von 3-(2,2-Dichlor-vinyl)-2,2-dimethyl-cyclopropan-1-carbonsäurederivaten.**

(30) Priorität : **21.07.79 DE 2929670**

(43) Veröffentlichungstag der Anmeldung : **28.01.81 (Patentblatt 81/04)**

(45) Bekanntmachung des Hinweises auf die Patenterteilung : **13.01.82 Patentblatt 82/02**

(84) Benannte Vertragsstaaten : **BE CH DE FR GB IT LI NL**

(56) Entgegenhaltungen : **Keine**

(73) Patentinhaber : **BAYER AG**
**Zentralbereich Patente, Marken und Lizenzen**
**D-5090 Leverkusen 1, Bayerwerk (DE)**

(72) Erfinder : **Hoffmann, Hellmut, Dr. Prof.**
**Tersteegenweg 17**
**D-5600 Wuppertal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 022 984 B1

Imprimerie Jouve, 18, rue St-Denis, 75001 Paris, France

Verfahren zur Herstellung von 3-(2,2-Dichlor-vinyl)-2,2-dimethyl-cyclopropan-1-carbonsäurederivaten

Die Erfindung betrifft ein neues Verfahren zur Herstellung von teilweise bekannten 3-(2,2-Dichlor-vinyl)-2,2-dimethyl-cyclopropan-1-carbonsäurederivaten.

Es ist bekannt, daß man 3-(2,2-Dichlor-vinyl)-2,2-dimethyl-cyclopropan-1-carbonsäureester erhält, wenn man 3-Formyl-2,2-dimethyl-cyclopropan-1-carbonsäureester mit Triphenylphosphin in Tetrachlorkohlenstoff umsetzt (vergleiche DE-OS 2 326 077). Nach dieser Synthesemethode erhält man die gewünschten Produkte jedoch nur in mäßigen Ausbeuten.

Es ist weiter bekannt, daß man 1,1-Dichlor-alkene erhält, wenn man Lithiumsalze von Dichlormethanphosphonsäureestern mit Aldehyden oder Ketonen umsetzt (vergleiche Synthesis *1975,* 535-536). Die Herstellung der Lithiumsalze von Dichlormethanphosphonsäureestern ist jedoch relativ aufwendig : man erhält sie aus Chlormethan-phosphonsäureestern durch Umsetzung mit Butyllithium und Tetrachlorkohlenstoff bei − 75 °C, wobei sorgfältig getrocknete Lösungsmittel zu verwenden sind und eine Inertgasatmosphäre erforderlich ist.

Es wurde nun gefunden, daß man 3-(2,2-Dichlor-vinyl)-2,2-dimethyl-cyclopropan-1-carbonsäurederivate der Formel I

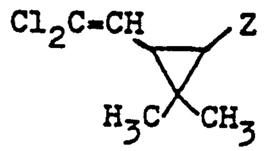

(I)

in welcher

Z für Acetyl, Cyano, Carbamoyl, Alkoxycarbonyl oder für einen Rest —$COOZ^1$, wobei $Z^1$ für einen im Alkoholteil von Pyrethroiden üblichen Rest steht,

erhält, wenn man α-Hydroxy-phosphonsäureester der Formel II

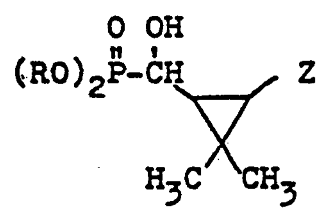

(II)

in welcher

Z die oben angegebene Bedeutung hat und

R für Alkyl oder Phenyl steht oder die beiden Reste R zusammen für geradkettiges oder verzweigtes Alkandiyl (Alkylen) stehen,

mit Dichlormethan-derivaten der Formel III

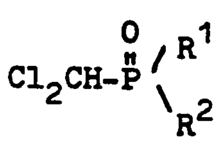

(III)

in welcher

$R^1$ und $R^2$ einzeln für Alkyl, Phenyl, Alkoxy oder Phenoxy oder zusammen für Alkandioxy(Alkylendioxy) stehen,

in Gegenwart einer Base und gegebenenfalls unter Verwendung eines Verdünnungsmittels bei Temperaturen zwischen − 100 und + 100 °C umsetzt.

Es ist als überraschend anzusehen, daß man nach dem erfindungsgemäßen Verfahren 3-(2,2-Dichlorvinyl)-2,2-dimethyl-cyclopropan-1-carbonsäurederivate wesentlich einfacher und kostengünstiger in guten Ausbeuten erhält als man in Anbetracht des Standes der Technik erwarten konnte.

Verwendet man als Ausgangsstoffe beispielsweise α-Hydroxy-α-(3-methoxycarbonyl-2,2-dimethyl-cycloprop-1-yl)-methanphosphonsäure-dimethylester und Dichlormethan-phosphonsäure-dimethylester, so kann die Reaktion dieser Verbindungen durch folgendes Formelschema skizziert werden :

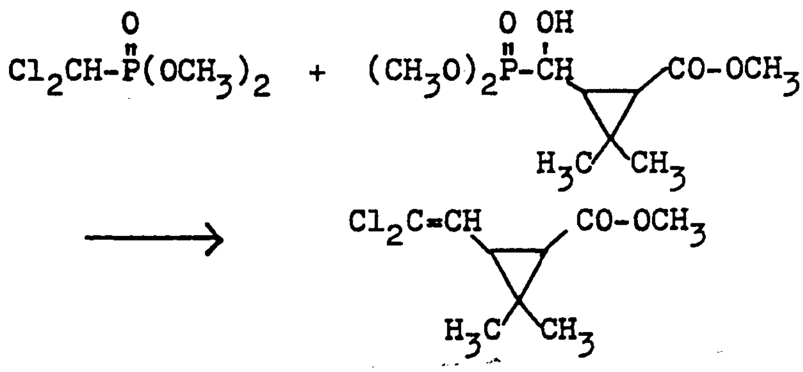

Die als Ausgangsverbindungen zu verwendenden α-Hydroxy-phosphonsäureester sind durch Formel (II) definiert. Vorzugsweise stehen darin

Z für Acetyl, Cyano, Carbamoyl, oder $C_1$-$C_4$-Alkoxycarbonyl, und

R für $C_1$-$C_4$-Alkyl oder Phenyl, oder beide Reste R stehen zusammen für 2,2-Dimethyl-propan-1,3-diyl.

Als Beispiele seien genannt :

α-Hydroxy-α-(3-methoxycarbonyl-2,2-dimethyl-cycloprop-1-yl)-methanphosphonsäure-dimethylester und -diethylester, α-Hydroxy-α-(3-ethoxycarbonyl-2,2-dimethyl-cycloprop-1-yl)-methan-phosphonsäure-dimethylester und -diethylester, α-Hydroxy-α-(3-acetyl-2,2-dimethyl-cycloprop-1-yl)-methanphosphonsäure-dimethylester und -diethylester sowie α-Hydroxy-α-(3-cyano-2,2-dimethyl-cycloprop-1-yl)-methanphosphonsäure-dimethylester und -diethylester.

Die α-Hydroxy-phosphonsäureester der Formel (II) und deren Herstellung sind Gegenstand einer noch nicht veröffentlichten Patentanmeldung (vgl. P 29 17 620.3).

Man erhält die Ausgangsverbindungen der Formel (II), indem man α-Oxo-phosphonsäureester der Formel IV

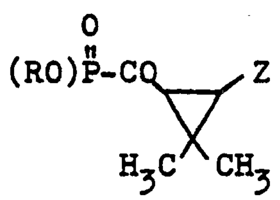

(IV)

in welcher

Z und R die oben angegebenen Bedeutungen haben,

mit einem Reduktionsmittel, wie z.B. Natriumtetrahydridoborat (Natriumboranat), gegebenenfalls unter Verwendung von Verdünnungsmitteln, wie z.B. Wasser und/oder Methanol und/oder Methylenchlorid, bei Temperaturen zwischen − 20 und + 50 °C, vorzugsweise zwischen − 10 und + 30 °C, umsetzt (vergleiche Chem. Ber. *103* (1970), 2984-2986). Zur Aufarbeitung und Isolierung der Produkte extrahiert man mit einem mit Wasser nicht mischbaren Lösungsmittel, wie z.B. Methylenchlorid, trocknet die nicht-wässrige Phase, filtriert und destilliert das Lösungsmittel unter vermindertem Druck ab.

Die α-Oxo-phosphonsäureester der Formel (IV) sind noch nicht in der Literatur beschrieben. Man erhält diese Verbindungen durch Umsetzung von Carbonsäurechloriden der Formel V

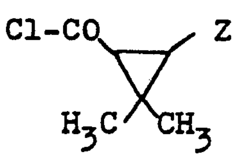

(V)

in welcher

Z die oben angegebene Bedeutung hat,

mit Phosphorigsäureestern der Formel VI

$$(RO)_2P{-}OR^3 \qquad (VI)$$

in welcher

R die oben angegebene Bedeutung hat und

$R^3$ für Alkyl, insbesondere für Methyl oder Ethyl steht, bei Temperaturen zwischen − 20 und + 150 °C, vorzugsweise zwischen 0 und 120 °C (vergleiche J. Am. Chem. Soc. *86* (1964), 3862-3866 und Methoden der organischen Chemie (Houben-Weyl-Müller), 4. Aufl., Band *12/1*, S. 453, Georg-Thieme-Verlag, Stuttgart 1963).

Die Produkte können durch Vakuumdestillation gereinigt werden.

Die noch nicht bekannten Carbonsäurechloride der Formel (V) erhält man gemäß nachstehendem Reaktionsschema aus bekannten Cyclopropan-carbonsäureestern (vergleiche J. Am. Chem. Soc. *89* (1967), 3912-3914 ; J. Org. Chem. *32* (1967), 3351-3355 ; Tetrahedron Lett. *1978,* 1847-1850 ; Bull. Soc. Chim. Belg. *87* (1978), 721-732) nach an sich bekannten Methoden, imdem man zunächst durch Hydrolyse, beispielsweise durch Umsetzung mit wässrig-alkoholischer Kalilauge bei Temperaturen zwischen 20 und 100 °C und anschließendes Ansäuern die entsprechenden Cyclopropancarbonsäuren herstellt und diese mit Halogenierungsmitteln, wie z.B. Thionylchlorid, bei Temperaturen zwischen 10 und 100 °C umsetzt.

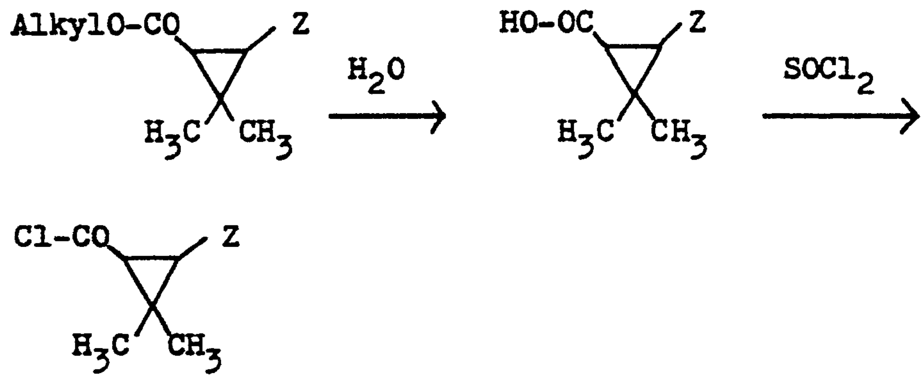


Die weiter als Ausgangsverbindungen zu verwendenden Dichlormethan-derivate sind durch Formel (III) definiert. Vozzugsweise stehen darin

$R^1$ und $R^2$ einzeln für Alkoxy mit 1 bis 4 Kohlenstoffatomen oder für Phenoxy oder beide Reste.

$R^1$ und $R^2$ stehen zusammen für geradkettiges oder verzweigtes Alkandioxy (Alkylendioxy) mit 2 bis 5 Kohlenstoffatomen.

Als Beispiele seien Dichlormethan-phosphonsäure-dimethylester, -diethylester und -diphenylester genannt.

Die Verbindungen der Formel (III) sind bekannt oder können nach an sich bekannten Verfahren hergestellt werden (vergleiche Synthesis *1975,* 535-536 ; Tetrahedron Letters *1975,* 609-610 ; ibid. *1975,* 4409-4410).

Man erhält Dichlormethan-phosphonsäureester der Formel (III) beispielsweise durch Umsetzung von Dichlormethan-phosphonsäuredichlorid (vergleiche GB-PS 707 961) mit Natrium- oder Kalium-salzen von Hydroxyverbindungen, wie z.B. mit Natrium- oder Kalium-methylat, -ethylat, -n- und -iso-propylat, -n-, iso-, -sek.- und -tert.-butylat, gegebenenfalls in Gegenwart eines Verdünnungsmittels, wie z.B. Toluol, bei Temperaturen zwischen 0 und 50 °C. Zur Reinigung der Produkte wird gegebenenfalls nach Filtration destilliert.

Das erfindungsgemäße Verfahren wird vorzugsweise unter Verwendung von Verdünnungsmitteln durchgeführt. Als solche kommen praktisch alle inerten organischen Lösungsmittel, insbesondere aprotisch polare Solventien in Frage. Hierzu gehören Ether, wie z.B. Glycol-dimethylether, Diglycoldimethylether, Tetrahydrofuran und Dioxan, Carbonsäureamide, wie z.B. Dimethylformamid, Dimethylacetamid und N-Methyl-pyrrolidon, Sulfoxide und Sulfone, wie z.B. Dimethylsulfoxid und Tetramethylensulfon, Phosphorsäureamide, wie z.B. Hexamethyl-phosphorsäuretriamid, sowie Nitrile, wie z.B. Acetonitril und Propionitril.

Beim erfindungsgemäßen Verfahren können die in der organisch-chemischen Synthese üblichen Basen verwendet werden. Hierzu gehören insbesondere Alkalihydroxide, wie z.B. Natrium- und Kaliumhydroxid, Alkalialkoholate, wie z.B. Natrium- und Kalium-methylat, Natrium- und Kalium-ethylat, Natrium- und Kalium-iso-propylat, Natrium- und Kalium-tert.-butylat, Alkalihydride, wie z.B. Natrium- und Kaliumhydrid, Alkaliamide, wie z.B. Natrium- und Kalium-amid, Alkyllithiumverbindungen, wie z.B. Butyllithium, sowie Amine, wie z.B. Diazabicyclononan und Diazabicycloundecen. Alkoholate werden als Basen besonders bevorzugt.

Die Reaktionstemperatur wird zwischen − 100 und + 100 °C, vorzugsweise zwischen − 80 und + 50 °C gehalten. Das erfindungsgemäße Verfahren wird im allgemeinen bei Normaldruck durchgeführt.

Je Mol α-Hydroxy-phosphonsäureester der Formel (II) werden 1 bis 3 Mol, vorzugsweise 1 bis 2 Mol Dichlormethan-phosphonsäureester der Formel (III) eingesetzt.

In einer bevorzugten Ausführungsform des erfindungsgemäßen Verfahrens werden die Ausgangsstoffe der Formeln (II) und (III) in einem der oben angegebenen Verdünnungsmittel bei Temperaturen zwischen − 80 und 0 °C vorgelegt und mit der Lösung einer Base in einem der oben angegebenen Verdünnungsmittel tropfenweise versetzt. Dann läßt man das Reaktionsgemisch auf Raumtemperatur kommen und rührt einige Stunden nach. Die Aufarbeitung erfolgt auf übliche Weise : man verdünnt das

Reaktionsgemisch mit Wasser und extrahiert mit einem mit Wasser nicht mischbaren Lösungsmittel, wie z.B. Diethylether oder Methylenchlorid. Die Extrakte werden mit Wasser gewaschen, getrocknet und filtriert. Vom Filtrat wird das Lösungsmittel abgezogen und das als Rückstand verbleibende Produkt durch Vakuumdestillation gereinigt. Zur Charakterisierung dient der Siedepunkt.

Da die als Ausgangsverbindungen eingesetzten 3-Formyl-2,2-dimethyl-cyclopropan-1-carbonsäureester der Formel (II) wie auch die erfindungsgemäß herzustellenden 3-(2,2-Dichlor-vinyl)-2,2-dimethyl-cyclopropan-1-carbonsäureester der Formel (I) jeweils asymmetrische Kohlenstoffatome aufweisen, können die Verbindungen der Formeln (I) und (II) in einer entsprechenden Anzahl von stereoisomeren Formen auftreten.

Das erfindungsgemäße Verfahren bezieht sich auf die Herstellung von Verbindungen der Formel (I), die entweder in Form der einzelnen Stereoisomeren oder als Gemische von Stereoisomeren erhalten werden.

Die nach dem erfindungsgemäßen Verfahren herzustellenden 2,2-Dimethyl-3-(2,2-dichlor-vinyl)-cyclopropan-1-carbonsäureester können als Zwischenprodukte zur Herstellung von insektizid und akarizid wirksamen Pyrethroiden verwendet werden (vergleiche DE-OS 2 326 077).

Beispiel

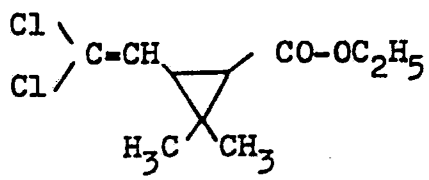

Zu einer Lösung von 31 g (0,1 Mol) α-Hydroxy-α-(3-ethoxycarbonyl-2,2-dimethyl-cycloprop-1-yl)-methan-phosphonsäure-diethylester und 44 g (0,2 Mol) Dichlormethanphosphonsäure-diethylester in 100 ml Tetrahydrofuran wird bei − 50 bis − 60 °C eine Lösung von 22,5 g Kalium-tert.-butylat in 150 ml Tetrahydrofuran tropfenweise gegeben. Man läßt die Temperatur langsam auf ca. 20 °C ansteigen und rührt das Gemisch weitere 35 Stunden bei dieser Temperatur. Das Reaktionsgemisch wird in 500 ml Diethylether aufgenommen und 4 mal mit je 300 ml Wasser gewaschen. Die organische Phase wird über Natriumsulfat getrocknet, filtriert und eingeengt. Der Rückstand wird zweimal destilliert.

1. Destillation : Siedetemperatur 100-140 °C/15 mbar ;

2. Destillation : Siedetemperatur 114-118 °C/15 mbar.

Man erhält so 21 g (89 % der Theorie) 2,2-Dimethyl-3-(2,2-dichlor-vinyl)-cyclopropan-1-carbonsäure-ethylester in Form einer farblosen Flüssigkeit, nach gaschromatographischer Analyse mit einem Gehalt von 76 % des trans-Isomeren.

Analog vorstehendem Beispiel erhält man

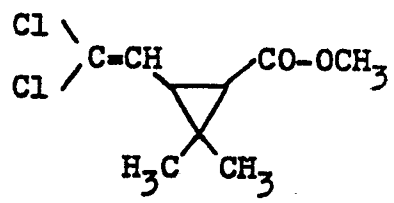

Als Ausgangsstoffe zu verwendende α-Hydroxy-phosphonsäureester der Formel (II) können beispielsweise wie folgt hergestellt werden :

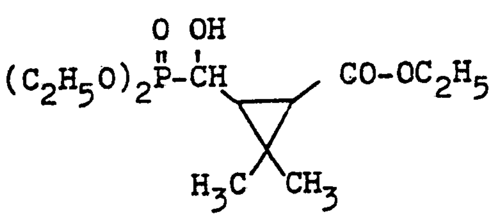

Zu einer intensiv gerührten Lösung von 1,2 g Natriumtetrahydridoborat in 75 ml Wasser wird innerhalb von 30 Minuten bei ca. 0 °C eine Lösung von 31 g (0,1 Mol) α-Oxo-α-(3-ethoxycarbonyl-2,2-dimethylcycloprop-1-yl)-methanphosphonsäure-diethylester in 50 ml Methylenchlorid tropfenweise gegeben. Das Reaktionsgemisch wird 90 Minuten bei 0 °C gerührt. Dann trennt man die organische Phase

ab, schüttelt die wässrige Phase mit 100 ml Methylenchlorid aus, vereinigt die Methylenchlorid-Lösungen, trocknet sie über Natriumsulfat, filtriert und engt ein. Der Rückstand wird aus 30 ml Ligroin umkristallisiert, abgesaugt und auf Ton getrocknet. Man erhält 19 g (62 % der Theorie) α-Hydroxy-α-(3-ethoxycarbonyl-2,2-dimethyl-cycloprop-1-yl)-methanphosphonsäure-diethylester vom Schmelzpunkt 58 °C.

Elementaranalyse :
berechnet : C 50,6 % ; H 8,1 % ; O 31,2 % ; P 10,1 % ;
gefunden : C 50,7 % ; H 8,2 % ; O 30,5 % ; P 10,1 %.

Analog vorstehendem Beispiel erhält man

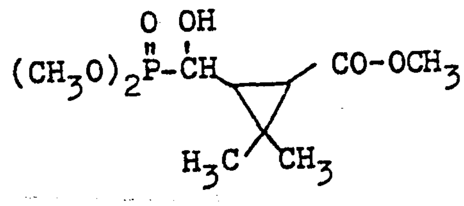

Als Ausgangsstoffe zu verwendende α-Oxo-phosphonsäureester der Formel (IV) können beispielsweise wie folgt hergestellt werden :

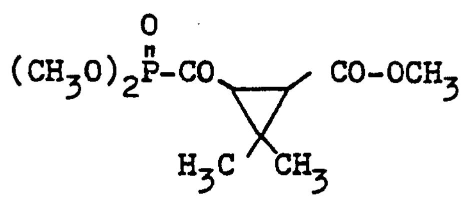

25 g (0,2 Mol) Trimethylphosphit werden zu einer auf 30 bis 35 °C erwärmten Lösung von 39 g (0,2 Mol) 3-Methoxycarbonyl-2,2-dimethyl-cyclopropan-1-carbonsäure-chlorid in 200 ml Methylenchlorid tropfenweise gegeben und das Reaktionsgemisch wird 3 Stunden gerührt. Nach Abdestillieren des Lösungsmittels im Vakuum erhält man 48 g (91 % der Theorie) α-Oxo-α-(3-methoxycarbonyl-2,2-dimethyl-cycloprop-1-yl)-methanphosphonsäure-dimethylester.

Elementaranalyse :
berechnet : C 45,5 % ; H 6,4 % ; O 36,4 % ; P 11,7 % ;
gefunden : C 44,9 % ; H 6,7 % ; O 36,6 % ; P 11,2 %.

Analog vorstehenden Beispiel erhält man

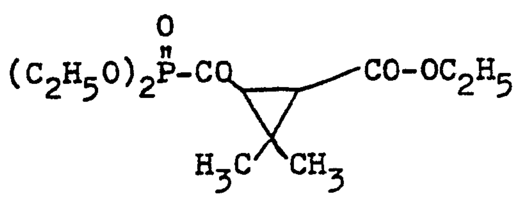

Elementaranalyse :
berechnet : C 51,0 % ; H 7,5 % ; O 31,4 % ; P 10,1 % ;
gefunden : C 50,4 % ; H 7,4 % ; O 31,3 % ; P 9,7 %.

Als Ausgangsstoffe zu verwendende Dichlormethan-phosphonsäureester der Formel (III) können beispielsweise wie folgt hergestellt werden :

(a)

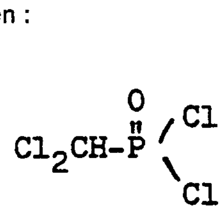

In eine Mischung aus 720 g (6 Mol) Chloroform und 274 g (2 Mol) Phosphortrichlorid werden portionsweise 266 g (2 Mol) Aluminiumchlorid gegeben. Das Reaktionsgemisch wird dann 12 Stunden unter Rückfluß zum Sieden erhitzt. Anschließend wird das Lösungsmittel im Vakuum abgezogen und der Rückstand wird in 2 l Methylenchlorid aufgenommen. Dazu werden bei 0 °C 440 ml konz. Salzsäure

getropft und es wird etwa zwei Stunden bei dieser Temperatur nachgerührt. Die organische Phase wird abgetrennt, über Natriumsulfat getrocknet und eingeengt. Der Rückstand wird fraktioniert destilliert. Man erhält 258 g (64,5 % der Theorie) Dichlormethan-phosphonsäuredichlorid in Form eines farblosen Öls vom Siedepunkt 48-50 °C/l mbar.

(b) 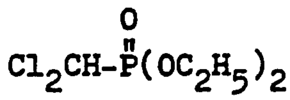

Zu einer Lösung von 227,5 g (1,13 Mol) Dichlormethan-phosphonsäuredichlorid in 800 ml Toluol werden bei 5-10 °C 153,5 g (2,26 Mol) Natriummethylat in 800 ml Ethanol getropft. Das Reaktionsgemisch wird fünf Stunden bei 20 °C nachgerührt. Dann wird abgesaugt, das Filtrat eingeengt und der Rückstand fraktioniert destilliert. Man erhält 195 g (78 % der Theorie) Dichlormethan-phosphonsäurediethylester in Form eines farblosen Öls vom Siedepunkt 84 °C/l mbar.

**Anspruch**

1. Verfahren zur Herstellung von 3-(2,2-Dichlor-vinyl)-2-2-dimethyl-cyclopropan-1-carbonsäurederivaten der Formel I

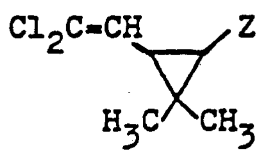

in welcher

Z für Acetyl, Cyano, Carbamoyl, Alkoxycarbonyl oder für einen Rest —COOZ$^1$, wobei Z$^1$ für einen im Alkoholteil von Pyrethroiden üblichen Rest steht,

dadurch gekennzeichnet, daß man α-Hydroxy-phosphonsäureester der Formel II

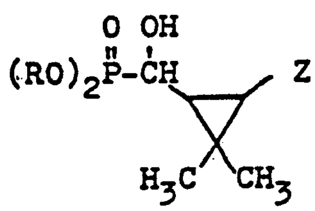

in welcher

Z die oben angegebene Bedeutung hat und

R für Alkyl oder Phenyl steht oder die beiden Reste R zusammen für geradkettiges oder verzweigtes Alkandiyl (Alkylen) stehen,

mit Dichlormethan-derivaten der Formel III

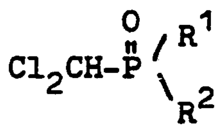

in welcher

R$^1$ und R$^2$ einzeln für Alkyl, Phenyl, Alkoxy oder Phenoxy oder zusammen für Alkandioxy (Alkylendioxy) stehen,

in Gegenwart einer Base und gegebenenfalls unter Verwendung eines Verdünnungsmittels bei Temperaturen zwischen − 100 und + 100 °C umsetzt.

**Claim**

1. Process for the preparation of 3-(2,2-dichlorovinyl)-2,2-dimethyl-cyclopropane-1-carboxylic acid derivatives of the formula I

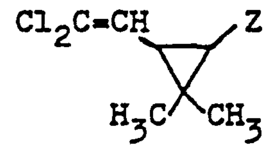

in which

Z represents acetyl, cyano, carbamoyl, alkoxycarbonyl or a radical —$COOZ^1$, wherein $Z^1$ represents a radical customary in the alcohol part of pyrethroids,

characterised in that α-hydroxy-phosphonic acid esters of the formula II

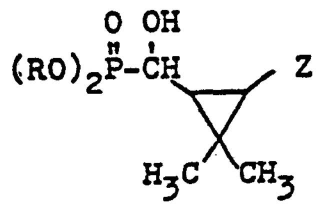

in which

Z has the meaning indicated above and

R represents alkyl or phenyl or the two radicals R together represent straight-chain or branched alkanediyl (alkylene),

are reacted with dichloromethane derivatives of the formula III

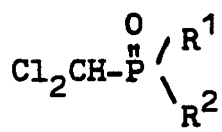

in which

$R^1$ and $R^2$ individually represent alkyl, phenyl, alkoxy or phenoxy or together represent alkanedioxy (alkylenedioxy),

in the presence of a base and if appropriate using a diluent, at temperatures between − 100 and + 100 °C.

**Revendication**

1. Procédé de production de dérivés d'acide 3-(2,2-dichlorovinyl)-2,2-diméthyl-cyclopropane-1-carboxylique de formule I :

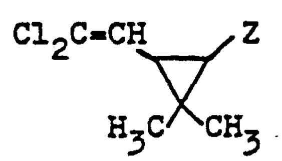

dans laquelle

Z est un reste acétyle, cyano, carbamoyle, alkoxycarbonyle ou un reste —$COOZ^1$ dans lequel $Z^1$ est un reste classique de la partie alcool de pyréthrines,

caractérisé en ce qu'on fait réagir des esters d'acide α-hydroxy-phosphonique de formule II :

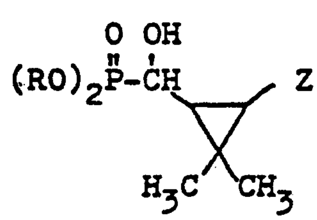

dans laquelle

Z a la définition indiquée ci-dessus et

R est un groupe alkyle ou phényle ou bien les deux restes R forment ensemble un groupe alcanediyle (alkylène) à chaîne droite ou ramifiée,

avec des dérivés de dichlorométhane de formule III :

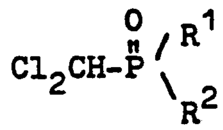

dans laquelle

$R^1$ et $R^2$ représentent individuellement un reste alkyle, phényle, alkoxy ou phénoxy ou forment ensemble un reste alcanedioxy (alkylènedioxy),

en présence d'une base et, le cas échéant, en utilisant un diluant, à des températures comprises entre − 100 et + 100 °C.